# EUROPEAN PATENT SPECIFICATION

(11) **EP 1 984 432 B1**
(45) Date of publication and mention of the grant of the patent: **21.11.2012**
(21) Application number: 07712705.8
(22) Date of filing: 12.02.2007
(51) Int. Cl.: C08J 5/06, C08L 23/16, C08K 9/08

(54) **METHOD. COATING LATEX AND REINFORCING CORD FOR FORMING A RUBBER ARTICLE BY EXTRUSION OR MOULDING**
VERFAHREN, BESCHICHTUNGSLATEX UND VERSTÄRKUNGSCORD ZUR HERSTELLUNG EINES KAUTSCHUKGEGENSTANDS DURCH EXTRUSION ODER ABFORMEN
PROCEDE, LATEX DE REVETEMENT ET CORDON RENFORCANT POUR LA FORMATION D'UN ARTICLE EN CAOUTCHOUC PAR EXTRUSION OU MOULAGE

(30) Priority: 16.02.2006 GB 0603062
(43) Date of publication of application: 29.10.2008
(73) Proprietor: NGF Europe Limited, St. Helens, WA9 4PR (GB)
(72) Inventor: KNOWLES, Rodney, P., St Helens WA11 9HW (GB)
(74) Representative: Instone, Terry
(86) International application number: PCT/GB2007/000474
(87) International publication number: WO 2007/093770

(56) References cited:
- EP-A1- 0 937 740
- WO-A-00/23505
- GB-A- 1 015 836
- GB-A- 1 389 267
- GB-A- 1 393 104
- JP-A- 2 167 346
- JP-A- 8 113 657
- JP-A- 2004 292 735
- US-B1- 6 287 411
- DATABASE WPI Week 198413 Derwent Publications Ltd., London, GB; AN 1984-078131 XP002448195 & JP 59 029144 A (YOKOHAMA RUBBER CO LTD) 16 February 1984 (1984-02-16)

## Description

The invention relates to reinforced rubber articles comprising reinforcing strands, particularly coatings for such strands and methods for forming rubber articles comprising coated reinforcing strands.

### Background

Within the moulded rubber goods industry, certain applications benefit from the inclusion of reinforcement, either in the form of individual fibres or textiles, in the rubber matrix of the moulded or extruded rubber article. The latter in particular permit good dimensional control of the moulded goods so that anisotropic behaviour can be designed into the product to enhance performance in the field. One such example is in the production of rubber seals for doors and windows where the introduction of a high elastic modulus cord into the rubber matrix along the length of the seal will effectively restrict stretching during processing and installation. The latter in turn will ensure that any joints that are present in the finished system will be stable without a tendency to open up and cause leakage. As the dimensional control is effective chiefly along the length of the seal, the other beneficial properties such as flexibility of the seal body is unaffected - allowing the product to fully serve its intended purpose.

In order for a reinforcing cord to function well, it should have adequate performance in respect of temperature resistance (to allow processing), high elastic modulus (to resist rubber stretch) and adhesion to the matrix rubber (so that the final article can behave as a true composite).

Often, the reinforcing cords or fibres are of glass - as this has good temperature stability and high elastic modulus. Conventionally, the treatment applied to the reinforcement fibres to improve adhesion to the matrix rubber is a resorcinol formaldehyde latex system (RFL). This utilises an appropriate rubber latex or blend of rubber latices for compatibility with the type of rubber to be used as the matrix for the rubber article, and a resin system based on resorcinol formaldehyde which cures the latex within or on the reinforcement prior to its incorporation into the rubber article. This type of system has been employed for many years.

The following abbreviations are used throughout the description: EPDM - rubber prepared from ethylene-propylene-diene monomer; BIIR - brominated isobutene isoprene rubber, CR - chloroprene rubber, CSM - chlorosulphonated polyethylene rubber, HNBR - hydrogenated acrylonitrile-butadiene rubber, NBR - acrylonitrile-butadiene rubber, SBR - styrene butadiene rubber.

In a conventional process for RFL coated reinforcement cords, the reinforcement strands, typically glass fibre, are individually dipped into an RFL treatment so that the liquid can fully coat the strands. A typical RFL treatment would comprise of latices used either singly or in combination from the following types: -
Vinyl pyridine - SBR terpolymer, SBR, CR, NBR and polybutadiene, together with a curing system based on a resorcinol-formaldehyde resin.

After dipping, excess RFL is removed by a mechanical means so that a constant level of pick-up is obtained. This amount commonly ranges from around 12 to 17% of the total weight of the glass plus RFL coating (on a dry basis). The dipped strands are then oven heated to evaporate the water and complete the curing of the resin - latex system.

The cured strands may be twisted at typically 40 to 100 turns per metre length and wound on to a bobbin to give a package that can conveniently be used in the manufacture of rubber articles at a later stage.

While this approach is suitable for some products, in some fields it is becoming necessary to decrease the cost of finished components. A favoured route to this end is to reduce the level of (relatively) expensive synthetic rubber polymer within the rubber matrix and replace this with various fillers, such as carbon black, calcium carbonate and plasticizing oil. Whilst this may lower the overall cost of the rubber compound as a mixture of materials, it may also increase the difficulty in obtaining adequate adhesion between the reinforcing strands and the filled rubber matrix. With currently available reinforcements, this means that a satisfactory finished product may be difficult to obtain when a highly filled rubber matrix is employed. This is particularly the case for products where the matrix rubber comprises EPDM rubber.

With the conventional RFL system a partial solution to this problem has been found by application of a specific adhesive layer on to the outside of the reinforcing cord. While this may be acceptable for certain applications, it can lead to the need for additional process steps and process equipment, as well as additional coating material for the reinforcement cords.

Patent publication GB 1 393 104 A discloses a reinforcement for elastomeric material comprises a bundle of fibres (a strand, yarn or cord formed from a plurality of filaments, woven or non-woven fabric formed from fibres in the form of cords, or any arrangement, woven or non-woven, of fibres or filaments) having a coating of, and/or impregnated with, an elastomer-compatible material and a vulcanisation or cure retarder which is acidic and capable of reacting with low molecular weight components of the elastomer-compatible material thereby preventing said components from migrating from the coating or impregnant. The vulcanisation or cure retarder is selected from N-nitrosoamines having boiling point greater than 200 °C, carboxylic acids and anhydrides or acid halides having a boiling point greater than 200 °C and cobalt amines. The term "elastomer" is said to include natural rubber and synthetic rubbers.

Patent publication GB 1 389 267 discloses a multiplicity of glass fibres prepared for incorporation into and reinforcement of continuous phase elastomers by the steps of (a) coating the glass fibres with a first composition which upon subsequent drying or curing will hold said fibres apart; (b) impregnating the coated glass fibres with a second, elastomeric-based composition capable of reacting with or adhering to said continuous phase elastomer; and (c) gathering the fibres into bundles either between steps (a) and (b) or after both (a) and (b) has been accomplished; wherein the second composition is applied whilst said first composition is sufficiently fluid to permit intermixing of the two compositions so that at least a mechanical bond and in some cases also a chemical bond will be attained between them on drying and curing. Suitable first compositions are said to include natural and synthetic rubber lattices, urethanes, polyamides (in suspension or produced by in situ reaction on the fibres) epoxides, polyesters, urea-formaldehyde, melamine formaldehyde and phenol-formaldehyde resins, epoxides plus diamines or polyamines, ethylene-propylene elastomers, vinyl pyridine-butadiene-styrene terpolymer a resorcinol formaldehyde latex, and epoxy adhesives. Suitable second compositions include vinyl pyridine, resorcinol formaldehyde latex and epoxy adhesives.

EP-A-0937740 discloses reinforcing cord which strongly adheres to a mixed rubber comprising a hydrogenated acrylonitrile-butadiene rubber having flex resistance and heat resistance and a hydrogenated acrylonitrile-butadiene rubber having dispersed therein zinc methacrylate, and a treating material for forming a coating layer on the cord. The reinforcing cord comprises a fibe for reinforcing a rubber, a first coating layer formed on the surface of the fibre, obtained by coating a treating material comprising a resorcin/formalin condensate and a rubber latex on the surface thereof, and a second coating layer formed on the first coating layer, obtained by coating another treating material comprising a rubber compound, a vulcanizing agent and one member selected from the group consisting of a silane coupling agent, a maleimide type vulcanization assistant and a dimethacrylate type vulcanization assistant.

US patent number US 6,287,411 discloses a bonded assembly made of a magnesium containing metal comprising at least about 25% by weight magnesium, a thermoplastic elastomer, and an adhesive between the magnesium containing metal and the thermoplastic elastomer, the adhesive comprising from about 20% to about 99% by weight of a polymeric material. The adhesive further contains at least one polymeric complimentary material, such as at least one of an aromatic-nitroso compound, a lead acid or metal oxide, a maleimide compound, a vulcanization agent, a phenolic epoxy resin, a phenolic resin, a crosslinking compound, a methylene donor compound, various organic solvents or water.

Hence there is a need to provide a reinforcing cord with improved adhesion in particular to highly filled rubber compounds - for example EPDM (rubber prepared from ethylene propylene diene monomer), so that a satisfactory level for processing and finished performance is obtained. There is also a need for a process for providing such cords which can employ conventional processing equipment without the need for excessive modifications. For instance, it would be advantageous if the coating used for forming or binding a reinforcing cord together from individual strands also provided improved adhesion to rubber matrices such as those comprising EPDM rubber, particularly filled rubber matrices.

### Summary of the invention

In a first aspect, the invention provides a method for forming by extrusion or moulding a rubber article comprising reinforcing strands of a strengthening material in a rubber matrix comprising EPDM rubber, the method comprising the sequential steps of:
i) coating the strands with a coating latex curable at the temperature of extrusion, curing or moulding, such that the coating latex remains substantially uncured after coating,
ii) drying the coating latex to form a coating film such that the coating film remains substantially uncured after drying,
iii) forming the rubber article comprising the reinforcing strands in a rubber matrix comprising EPDM rubber by extrusion or moulding and curing at a temperature and for a time whereby the coating film on the strands is substantially cured within the rubber article, wherein the coating latex comprises halogenated rubber, metal oxide, maleamide crosslinking agent, and nitroso-compound dispersed in water.

A second aspect of the invention provides a coating latex, for coating filamentary strengthening material for extruded or moulded rubber articles, comprising a metal oxide, a maleimide crosslinking agent, a nitroso-compound, and halogenated rubber dispersed in water.

Preferably, the coating latex is used for coating filamentary strengthening material for extruded or moulded rubber articles having a rubber matrix comprising EPDM rubber. The latex is preferred also for use when the rubber matrix is filled or highly filled as described herein. Use for a filled rubber matrix comprising EPDM rubber is particularly preferred.

The coating latex of the second aspect of the invention is a preferred latex for use in the method of the first aspect of the invention.

A third aspect of the invention provides a cord for reinforcing rubber articles, the cord comprising strands of strengthening material coated with a coating film formed by drying a coating latex according to the second aspect of the invention.

Preferably, the cord is used for strengthening extruded or moulded rubber articles having a rubber matrix comprising EPDM rubber. The cord is preferred also for use when the rubber matrix is filled or highly filled as described herein. Use in a filled rubber matrix comprising EPDM rubber is particularly preferred.

A fourth aspect of the invention provides a rubber article comprising a rubber matrix and a cord according to the third aspect of the invention.

Preferably, the rubber article has a rubber matrix comprising EPDM rubber. The rubber article preferably has a rubber matrix which is filled or highly filled as described herein. Rubber articles having a filled rubber matrix comprising EPDM rubber are particularly preferred.

Without wishing to be bound by theory, it is believed that the delaying of the curing or crosslinking of the coating until the coated reinforcement is inside the rubber matrix leads to the possibility of crosslinking between the coating and the rubber matrix, enhancing the adhesion between the cord and the rubber matrix, particularly when the rubber matrix comprises EPDM rubber.

### Detailed description:

In the method of the present invention, resorcinol formaldehyde resin, used in the conventional method for coating reinforcement cords, is replaced by a mixture of curatives and the processing conditions for drying of the dipped strand are chosen so that curing or crosslinking of the latex does not occur at the drying stage and is delayed until the reinforcement cord is inside the rubber matrix, comprising EPDM rubber, such that crosslinking of the coating takes place at least partly contemporaneously with the curing of the rubber matrix.

The strands making up the reinforcing cord may be suitably formed into a cord prior to their incorporation into the rubber article. Preferably the strands are formed into a cord after coating the strands with the coating latex.

The coating of the strands of the cord may be carried out by conventional methods such as dipping or spraying. Dipping is a preferred process for application of the coating latex. The water content of the latex is adjusted in order to give a suitable viscosity for the chosen coating process. Typically the water content of the latex is from 20 to 90% by weight, but may be even higher if required for a specific coating process.

After application of the coating latex, the coating layer is dried in order to form a coating film. It is important that the drying process does not lead to substantial curing or crosslinking of the coating film. The details of the drying process will thus depend upon the coating latex chosen and the amount and thickness of coating layer on the reinforcing strands, but typically will involve heating the coated reinforcing strands cord to a temperature in the range 90 to 130°C until most of the water has been lost from the coating latex: i.e. the coating latex will have a moisture content of 3% by weight or less, preferably 1 % by weight or less (as measured by equilibrium weight loss at 200°C). Typical drying times in the method of the invention are less than 30 minutes, preferably less than 10 minutes, more preferably less than 5 minutes.

The coating film should be substantially uncured after drying. The degree of cure for rubbers is conventionally measured by means of monitoring the elastic modulus for samples in a commercially availably curemeter such as a moving die rheometer. By substantially uncured it is meant that the material of the coating film has an elastic modulus of less than 20% of its fully cured elastic modulus, preferably less than 10%. The elastic modulus and degree of cure of the coating-on the cord can be measured indirectly by solvent swelling methods.

The rubber article is formed by extrusion or by moulding of a rubber matrix around the coated reinforcing strands of the invention. Conventional extrusion followed by in-line oven curing, or secondary moulding techniques may be used, at a temperature and for a time such that the rubber of the rubber matrix and the coating film are substantially cured within the rubber matrix of the rubber article. By this it is meant that the materials attain at least 80% preferably at least 90% of their fully cured elastic modulus. Typically, a moulding or extrusion temperature in excess of 140°C, preferably 150°C will be used for a suitable time. Curing after extrusion or moulding may be carried out by a suitable method such as heating in a conventional or microwave oven, hot air treatment, hot salt solution bath or fluidised bed. Typical curing requires heating at 200°C for 1 minute.

The coating latex for the first aspect of the invention may be any suitable latex which can be dried to a film without substantial curing or crosslinking taking place. A preferred coating latex is the coating latex of the second aspect of the invention, and comprises a halogenated rubber, metal oxide, maleimide crosslinking agent and nitroso-compound dispersed in water. It has been found that such a latex can be readily dried without risk of excessive curing. It has also been found that this latex forms a film which provides excellent adhesion to rubber matrices, particularly filled or highly filled rubber matrices as described herein, more particularly rubber matrices comprising EPDM rubber, especially filled rubber matrices comprising or consisting of EPDM rubber.

Suitable halogenated rubbers for use in the coating latex of the second aspect of the invention include brominated and chlorinated rubbers. Preferred halogenated rubbers include chloroprene rubber, chlorosulphonated polyethylene rubber, and mixtures thereof. Particularly preferred for high adhesive strength is chlorosulphonated polyethylene rubber. For low cost reliable adhesion with filled rubber matrices, chloroprene rubber may be utilised. The halogenated rubber is suitably present at a level such that the non-aqueous part of the latex comprise from 10 to 80% by weight of halogenated rubber, preferably from 20 to 50%. Preferably, the non-aqueous part of the latex comprises at least 1% by weight, more preferably at least 3% by weight of chlorosulphonated polyethylene rubber as at least part of the halogenated rubber. By non-aqueous part of the latex is meant any ingredient of the latex which is not water, irrespective of whether it is soluble in water.

Other synthetic rubbers may also be present in latex form as part of the coating latex of the second aspect of the invention. For instance SBR latex may be present at up to 80% by weight of the non-aqueous part of the latex.

The metal oxide for use in the coating latex of the second aspect of the invention may be any known metal oxide such as the oxides of zinc, cadmium, magnesium, lead, zirconium. Zinc oxide is preferred for its particular compatibility with the coating latex of the invention. The metal oxide is present suitably from 1 to 25%, preferably from 3 to 17%, more preferably from 4 to 11 % by weight of the non-aqueous part of the latex.

Water, preferably deionized water, is used in the coating latex of the second aspect of the invention to provide an aqueous latex. This is suitably present as from 20 to 90% by weight of the coating latex.

A maleimide crosslinking agent is present in the coating latex of the second aspect of the invention. The maleimide crosslinking agent may be a bismaleimide or a polymaleimide or mixtures thereof. Suitable bismaleimides and polymaleimides are such as disclosed in US 4,323,662 at column 5 line 14 to column 6 line 42. A suitable commercial maleimide crosslinking agent is BMI-M-20 polymaleimide supplied by Mitsui Toatsu Fine Chemicals Inc. The maleimide crosslinking agent is suitably present as from 2 to 30% by weight of the non-aqueous part of the coating latex, preferably from 5 to 20%, more preferably from 6 to 15%.

The coating latex of second aspect of the invention also suitably comprises a nitroso-compound. The nitroso-compound of the present invention can be any aromatic hydrocarbon, such as benzenes, naphthalenes, anthracenes, biphenyls, and the like, containing at least two nitroso groups attached directly to non-adjacent ring carbon atoms. More particularly, such nitroso compounds are described as aromatic compounds having from 1 to 3 aromatic groups, including fused aromatic groups, having from 2 to 6 nitroso groups attached directly to non-adjacent carbon atoms of the aromatic groups. Preferred nitroso compounds are the dinitroso aromatic compounds, especially the dinitrosobenzenes and dinitrosonaphthalenes, such as the meta- or para-dinitrosobenzenes and the meta- or para-dinitrosonaphthalenes. The nuclear hydrogen atoms of the aromatic nucleus can be replaced by alkyl, alkoxy, cycloalkyl, aryl, aralkyl, alkaryl, arylamine, arylnitroso, amino, halogen, and like groups. The presence of such substituents on the aromatic nuclei has little effect on the activity of the nitroso compounds in the present invention. As far as is presently known, there is no limitation as to the character of the substituent, and such substituents can be organic or inorganic in nature. Thus, where reference is made herein to nitroso-compound, it will be understood to include both substituted and unsubstituted nitroso compounds, unless otherwise specified.

Particularly preferred nitroso compounds are characterized by the formula: (R)ₘ - Ar - (NO)₂ wherein Ar is selected from the group consisting of phenylene and naphthalene; R is a monovalent organic radical selected from the group consisting of alkyl, cycloalkyl, aryl, aralkyl, alkaryl, arylamine, and alkoxy radicals having from 1 to 20 carbon atoms, amino, or halogen, and is preferably an alkyl group having from 1 to 8 carbon atoms, and m is zero, 1, 2, 3, or 4, and preferably is zero.

Nitroso-compounds which are suitable for the coating latex of the second aspect of the invention include m-dinitrosobenzene, p-dinitrosobenzene, m-dinitrosonaphthalene, p-dinitrosonaphthalene, 2,5-dinitroso-p-cymeme, 2-methyl-1,4dinitrosobenzene, 2-methyl-5-chloro-1,4-dinitrosobenzene, 2-fluoro-1,4dinitrosobenzene, 2-methoxy-1-3-dinitroso-benzene, 5-chloro-1,3-dinitrosobenzene, 2-benzyl-1,4-dinitrosobenzene, 2-cyclohexyl-1,4-dinitrosobenzene and combinations thereof. Particularly preferred nitroso compounds include p-dinitrosobenzene and m-dinitrosobenzene, especially p-dinitrosobenzene. The non-aqueous part of the coating latex of the second aspect of the invention suitably comprises from 3 to 50% by weight of nitroso-compound, preferably from 6 to 35%, more preferably from 9 to 17%.

The coating latex of the second aspect of the invention may also include other ingredients which do not interfere with the action of the invention, for instance up to 3% by weight of surfactant and/or dispersing agent. Carbon black may also be present in the coating latex, suitably from 0.5 to 10% by weight of the non-aqueous part of the coating latex, preferably form 1 to 4 % by weight. The strands of strengthening material are of any suitable fibre or strand-like material, preferably selected from the group consisting of glass, polyester, aramid, carbon fibres and mixtures thereof. Particularly preferred for good adhesive bonding to the rubber matrix are glass fibres.

The strands of strengthening material suitably have a weight per unit length (tex value) from 50 to 1000 g/km, preferably from 100 to 500 g/km.

Reinforcing cords according to the invention suitably comprise from 65 to 95% by weight of reinforcing fibre, preferably from 75 to 93%, more preferably from 80 to 90%, with the remainder of the reinforcing cord comprising the non-aqueous part of the coating latex in dried form.

The various aspects of the invention may be used with unfilled or lightly filled rubber matrices comprising EPDM rubber, but show particular advantages over conventional RFL coating methods for rubber matrices comprising a filler in addition to the EDPM rubber and the curing system for the rubber matrix, such as where the rubber matrix is highly filled and comprises at least 100phr filler, preferably at least 200phr filler, more preferably at least 300 phr filler. By phr is meant parts by weight of filler in the rubber matrix compared to 100 parts by weight of rubber in the rubber matrix.

Typical fillers are not primarily involved in chemical curing of the matrix and are added at least to reduce the raw material cost for the article. Fillers include but are not limited to carbon black, calcium carbonate in fine particulate form (such as with a weight median particle diameter of 500 µm or less) and paraffinic oils and waxes. The use of carbon black can have the benefit of enhancing curing.

Although the method of the first aspect of the invention is applicable with a rubber matrix comprising EPDM rubber, it is highly preferred if the rubber matrix comprises EPDM rubber as at least 20% by weight of the rubber in the rubber matrix, more preferably at least 50%, even more preferably at least 80%. It is most preferable that the rubber of the rubber matrix consists essentially of EDPM rubber, meaning that at least 90%, preferably at least 95%, more preferably at least 99%, most preferably all of the rubber of the rubber matrix is EPDM rubber. Other rubbers such as ethylene/propylene rubber, hydrogenated acrylonitrile-butadiene, butadiene rubber and mixtures thereof may also be present in the rubber matrix. The weight of rubber means the weight of polymeric rubber prior to curing and does not include the weight of any cure system.

The coating latex of the first aspect of the invention and the reinforcing cords of the third aspect of the invention may be used with matrix rubbers such as EPDM, ethylene/propylene rubber, hydrogenated acrylonitrile-butadiene, butadiene rubber and mixtures thereof. However it is preferred to use these aspects of the invention with a rubber matrix comprising EPDM rubber as at least 20% by weight of the rubber in the rubber matrix, more preferably at least 50%, even more preferably at least 80%. It is most preferable that the rubber of the rubber matrix consists essentially of EDPM rubber, meaning that at least 90%; preferably at least 95%, more preferably at least 99%, most preferably all of the rubber of the rubber matrix is EPDM rubber. These preferred EPDM rubber contents are also applicable to the articles of the fourth aspect of the invention.

The invention will now be described further by reference to the following nonlimiting examples.

### Example 1

Dipping systems were formulated using the following ingredients: -

**Table 1**

| | **Ex 1** | **Ex 2** | **Ex 3** | **Ex 4** | **Ex 5** | **Ex 6** | **Ex 7** | **Ex 8** | **Ex 9** |
|---|---|---|---|---|---|---|---|---|---|
| **Maleimide crosslinker⁽¹⁾** | 4.30 | 8.61 | 8.61 | 8.61 | 12.9 | 21.6 | 13.0 | 21.5 | 43.0 |
| **p-dinitrosobenzene** | 6.49 | 13.0 | 13.0 | 13.0 | 19.5 | 32.5 | 19.6 | 32.5 | 64.9 |
| **ZnO** | 3.39 | 6.78 | 6.78 | 6.78 | 10.2 | 17.0 | 10.2 | 17.0 | 33.9 |
| **Surfactant⁽²⁾** | 0.19 | 0.38 | 0.38 | 0.38 | 0.57 | 0.95 | 0.57 | 0.95 | 1.89 |
| **Disp. Agent⁽³⁾** | 0.32 | 0.63 | 0.63 | 0.63 | 0.95 | 1.59 | 0.95 | 1.58 | 3.17 |
| **Carbon black⁽⁴⁾** | 1.58 | 3.17 | 3.17 | 3.17 | 4.75 | 7.94 | 4.77 | 7.92 | 15.8 |
| **Mill water:** | 19.9 | 39.8 | 39.8 | 39.8 | 59.7 | 99.7 | 59.9 | 99 | 199 |
| **CSM latex⁽⁵⁾** | 6.3 | 12.7 | 12.7 | 12.7 | 19.0 | 31.7 | 309.1 | 238.6 | 63.3 |
| **CR lastex⁽⁶⁾** | 59 | 29 | 59 | 147 | 88 | 147 | - | - | - |
| **SBR latex⁽⁷⁾** | 290 | 290 | 249 | 124 | 166 | - | - | - | - |
| **Dilution water** | 109 | 95 | 108 | 144 | 119 | 141 | 82 | 81 | 75 |

| | | | | | | | | | |
|---|---|---|---|---|---|---|---|---|---|
| (1) BMI-M-20 (Mitsui Toatsu Fine Chemicals, Inc) (2) Polywet Z1766 (Uniroyal Inc) (3) Marasperse CBOS-4 (American Can Company) (4) Sterling NS (Cabot Corp) (5) Hypalon 450 (Sumitomo Corp) (comprising 40% by weight water) (6) Lipren T (PolymerLatex Ltd) (comprising 40% by weight of water) (7) Intex 084 (Polymeri Europa UK Ltd) (comprising 41% by weight of water) All water used was deionised. | | | | | | | | | |

The dipping formulations indicated above were prepared as follows:

The first 7 ingredients for each example were milled in a ceramic bead mill for approximately 30 minutes. The mixtures were then transferred to a paddle type stirred vessel and the latices added under gentle agitation. The final dilution water was then added under the same conditions and stirring continued for a further 30 minutes.

In order to measure the adhesive properties of the treatment, a number of the cords were aligned on jig in a parallel direction and moulded against rubber compound to form test pieces. The type of measurement made is commonly referred to as a 'peel test' where the cords and the rubber part of the moulding are pulled apart under tension. The degree of force required to cause separation is a measure of the adhesion between the two components.

Pre-plied glass cords comprising 5 x 140 tex (g/km) strands were wound on a purpose made jig in a parallel arrangement and treated with the above mixtures so as to give a uniform coverage of the glass cord surface. Following the coating treatment, they were then dried for 30 minutes at 60°C. A commercial highly filled test rubber compound based on a curable EPDM with a filler level of 325 phr was attached to the dried cord surface and the cords removed from the jig. Further drying for 15 minutes at 60°C was then applied to remove any residual moisture. The completed arrangement of cords with rubber compound was then press moulded for 8 minutes at 180°C to effect cure of the rubber and bonding to the cords.

After allowing time for the moulded samples to cool to room temperature, they were tested for peel adhesion level between treated cords and cured rubber.

The results in terms of force (measured in Newtons) per 25mm of sample width that were obtained are given in the following table: -

**Table 2**

| | Test 1 | Test 2 |
|---|---|---|
| Ex 1 | 48.4 | 46.5 |
| Ex 2 | 46.2 | 39.9 |
| Ex 3 | 67 | 60 |
| Ex 4 | 163.2 | 177.4 |
| Ex 5 | 110 | 129 |
| Ex 6 | 140 | 184.3 |
| Ex 7 | 100.3 | 112.2 |
| Ex 8 | 118.8 | 167 |
| Ex 9 | 30.9 | 31.2 |

As a comparison value, glass cords produced with conventional RFL that is commonly used with normally filled EPDM rubber for this type of application gave a peel adhesion value of 17 N/25mm when used with the filled rubber as used in the examples of table 2.

From the result table above it is clear that the mixtures covered by the invention result in much improved adhesion to the commercial, highly filled EPDM rubber.

### Example 2

Dipping systems were formulated using the following materials: -

**Table 3**

| | Ex 10 | Ex 11 | Ex 12 |
|---|---|---|---|
| Poly BMI | 6.7 | 6.3 | 10.1 |
| p-dinitrosobenzene | 10.1 | 9.5 | 15 |
| ZnO | 5.3 | 5.0 | 8.0 |
| Surfactant | 0.29 | 0.28 | 0.45 |
| Disp. agent | 0.49 | 0.47 | 0.75 |
| Carbon black | 2.5 | 2.3 | 3.7 |
| Mill water: | 31 | 29 | 47 |
| CSM⁽¹⁾latex | 9.8 | 9.3 | 15 |
| CR⁽²⁾latex | 63 | 86 | 52 |
| PB⁽³⁾latex | 74 | 50 | 60 |

| | | | |
|---|---|---|---|
| (1) Hypalon 450 (Sumitomo Corp) (comprising 40% by weight water) (2) Lipren T (PolymerLatex Ltd) (comprising 40% by weight of water) (3) Genflo 8028 (Omnova Solutions Inc.) (comprising 50% by weight of water) | | | |

The above dips were prepared in a similar manner to those in example 1. In this case however there was no dilution water required to allow the processing of the strands on a commercial dipping unit.

Glass strands of 330 tex (g/km) were individually dipped into each of the solutions and then passed through small orifices to reduce the pick up to from 16 to 20% by weight of coating expressed as weight of dried coating with respect to weight of untreated strands (corresponding to 13.8 to 16.7% by weight of dried coating with respect to the weight of final dried coated strands). The strands were dried in an oven to simply remove the water but not to allow any curing or crosslinking reactions to occur.

Three strands were plied together on a conventional ring type machine and given a twist level of 60 turns per metre. This operation was carried out in order to produce cord samples that were of a suitable size for testing for peel adhesion to the rubber test compound.

Cords from each trial run were wound on a jig in a parallel alignment and placed in a press mould with the test rubber compound (highly filled EPDM as for example 1 detailed above).

Curing of the test samples was carried out by heating at 149°C for 30 minutes.

After allowing time for the moulded samples to cool to room temperature, they were tested for peel adhesion level between treated cords and cured rubber. The results in terms of force (measured in Newtons) per 25mm of sample width that were obtained are given in the following table: -

**Table 4**

| Trial no. | Average peel adhesion (N/25mm) |
|---|---|
| Ex 10 | 52 |
| Ex 11 | 46,58 |
| Ex 12 | 111, 97, 111 |

Again, high adhesion forces were obtained between the coated experimental cords and the highly filled EPDM rubber.

### Example 3

The adhesion between cord and rubber was further investigated by pull-out testing and by peel testing. For the pullout tests the glass cord was:

| | |
|---|---|
| Glass: | ~1600 filaments, 10µ diameter = 330 g/km |
| Twist: | 60 tpm Z |
| Cord: | 330.1 Z60 |

For the peel adhesion tests the glass cord was:

| | |
|---|---|
| Glass: | ~1600 filaments, 10µ diameter = 330 g/km |
| Ply: | x3 strands 60 tpm Z |
| Cord: | 330.1 x3 Z60 |

The cords were treated with the coating composition of the invention as for Example 12 above with a dried coating level of 16-20% by weight of the uncoated cord. As a control, cords were treated with the same level of conventional RFL coating; i.e. a conventional chloroprene resorcinol-formaldehyde latex coating system.

The rubber compounds that were used were based upon two different EPDMs: Buna G 6470 supplied by Lanxess and Nordel 4770 supplied by Dow Chemical Company. The polymer viscosities were measured at 59 and 70 Mooney units respectively for the Buna 59 MU and for the Nordel 70 MU (both ML 1 +4 125°C) using a standard Mooney viscometer. A range of compounds were made with increasing levels of filler. The ratios of carbon black to calcium carbonate to oil were kept approximately constant. Three sets of compounds were studied: the Buna EPDM with a sulphur cure system (16.7 phr) and the Nordel EPDM with both a sulphur (16.7 phr) and a peroxide cure system (9.5 phr):

**Table 5**

| *Parts per hundred of rubber* | Buna G 6470 with sulphur cure | | | | |
|---|---|---|---|---|---|
| | Nordel 4770 with sulphur cure | | | | |
| | Nordel 4770 with peroxide cure | | | | |
| EPDM | 100 | 100 | 100 | 100 | 100 |
| Carbon Black N762 | 90 | 110 | 130 | 150 | 175 |
| Calcium Carbonate | 50 | 60 | 75 | 85 | 100 |
| Paraffinic Oil | 60 | 80 | 95 | 115 | 125 |
| Total Filler | 200 | 250 | 300 | 350 | 400 |

The pull out test was a U-test geometry. A loop of glass cord was moulded within a rubber strip 10 mm thick and cured for 30 minutes at 149°C. The loop was pulled from the rubber block with a crosshead speed of 50 mm/min. The side with the weakest adhesion was removed from the block. The maximum force was reported as the pull-out adhesion.

The peel test specimens were prepared by using the larger cord. These were laid parallel, with contact along the length from cord to cord - to form a plane of cords. EPDM was vulcanised on top of the cords, moulded for 30 minutes at 149°C. Peel specimens 25 mm wide were sectioned from the composite. The rubber was peeled away from the cords using a crosshead speed of 50 mm/min. Again, the maximum force was reported as the peel adhesion force. After peeling, the cords were inspected for the percentage area of visible rubber remaining on the cord surface - a visual assessment of the location of the tear path.

The results for pull-out adhesion force (N) are shown in table 6

**Table 6**

| Filler(phr) loading | 59M-S Ex12 | 59M-S RFL | 70M-S Ex12 | 70M-S RFL | 70M-P Ex12 | 70M-P RFL |
|---|---|---|---|---|---|---|
| 200 | 68 | 40 | 68 | 36 | 58 | 9 |
| 250 | 50 | 28 | 65 | 35 | 47 | 7 |
| 300 | 67 | 35 | 77 | 34 | 50 | 9 |
| 350 | 50 | 28 | 78 | 30 | 29 | 7 |
| 400 | 69 | 33 | 66 | 25 | 29 | 8 |

The results for Peel adhesion are shown in table 7 in units of N/25mm

**Table 7**

| Filler(phr) loading | 59M-S Exl2 | 59M-S RFL | 70M-S Ex12 | 70M-S RFL | 70M-P Ex12 | 70M-P RFL |
|---|---|---|---|---|---|---|
| 200 | 155 | 55 | 230 | 55 | 165 | 165 |
| 250 | 250 | 55 | 265 | 50 | 250 | 175 |
| 300 | 230 | 60 | 230 | 75 | 190 | 165 |
| 350 | 210 | 65 | 230 | 65 | 180 | 80 |
| 400 | 215 | 75 | 195 | 75 | 165 | 90 |

The levels of adhesion observed were significantly higher for the EX12 coating than the standard RFL. Very good adhesion was obtained to the EPDM compounds with 400 parts of filler.

For the tear path, it was found that for the sulphur cure rubbers, the control samples gave no visible rubber tear, indicating that the rubber had peeled away from the glass indicating poor adhesion. For the cords coated with Example 12 in the sulphur cure rubbers, for filler levels of 300phr and above, 100% visible rubber tear was found, indicating excellent adhesion. For the peroxide cure, at phr of 300 and above, both the control samples and the Example 12 coated samples gave visual rubber tear, but the values were 100% for the example 12 coating and varied between 0 and 85% for the RFL coating.

## Claims

1. A method for forming by extrusion or moulding a rubber article comprising reinforcing strands of a strengthening material in a rubber matrix comprising ethylene-propylene-diene monomer rubber, the method comprising the sequential steps of:
i) coating the strands with a coating latex curable at the temperature of extrusion, curing or moulding, such that the coating latex remains substantially uncured after coating,
ii) drying the coating latex to form a coating film such that the coating film remains substantially uncured after drying,
iii) forming the rubber article comprising the reinforcing strands in a rubber matrix comprising ethylene-propylene-diene monomer rubber by extrusion or moulding and curing at a temperature and for a time whereby the coating film on the strands is substantially cured within the rubber article,
wherein the coating latex comprises halogenated rubber, metal oxide, maleimide crosslinking agent, and nitroso-compound dispersed in water.

2. A method according to claim 1 wherein the strands are formed into a cord prior to forming the rubber article.

3. A method according to claim 1 or claim 2 wherein the strands are formed into a cord prior to coating the strands.

4. A method according to any preceding claim wherein the halogenated rubber is selected from the group consisting of chloroprene rubber, chlorosulphonated polyethylene rubber, and mixtures thereof.

5. A method according to any preceding claim wherein the strands of strengthening material are selected from the group consisting of glass, polyester, aramid, carbon fibres and mixtures thereof.

6. A method according to any preceding claim wherein the rubber matrix comprises a filler.

7. A method according to claim 6 wherein the rubber matrix comprises at least 100phr of filler.

8. A method according to claim 6 or claim 7 wherein the filler is selected from the group consisting of carbon black, calcium carbonate, oil and mixtures thereof.

9. A method according to any preceding claim wherein the rubber of the rubber matrix comprises at least 20% by weight of ethylene-propylene-diene monomer rubber.

10. A method according to any preceding claim wherein the rubber matrix comprises at least 50% by weight of ethylene-propylene-diene monomer rubber.

11. A method according to claim 10 wherein the rubber of the rubber matrix comprises at least 90% by weight of ethylene-propylene-diene rubber.

12. A coating latex, for coating filamentary strengthening material for extruded or moulded rubber articles, comprising a metal oxide, a maleimide crosslinking agent, a nitroso-compound, and halogenated rubber, dispersed in water.

13. A coating latex according to claim 12 wherein the nitroso-compound is p-dinitrosobenzene.

14. A coating latex according to claim 12 or claim 13 wherein the metal oxide is zinc oxide.

15. A coating latex according to any one of claims 12 to 14 wherein the halogenated rubber is selected from the group consisting of chloroprene rubber, chlorosulphonated polyethylene rubber and mixtures thereof.

16. A coating latex according to any one of claims 12 to 15 wherein the non-aqueous part of the coating composition comprises from 10 to 80% by weight of halogenated rubber.

17. A coating latex according to any one of claims 12 to 16 wherein the non-aqueous part of the coating composition comprises from 3 to 50% by weight of nitroso-compound.

18. A coating latex according to any one of claims 12 to 17 wherein the non-aqueous part of the coating composition comprises from 2 to 30% by weight of maleimide crosslinking agent.

19. A coating latex according to any one of claims 12 to 18 wherein the non-aqueous part of the coating composition comprises from 1 to 25% by weight of metal oxide.

20. A coating latex according to any one of claims 12 to 19 comprising from 20 to 90% by weight of water.

21. A cord for reinforcing rubber articles comprising strands of strengthening material coated with a coating film formed by drying a coating latex according to any one of claims 12 to 20.

22. A cord according to claim 21 wherein the strands are glass fibres.

23. A cord according to claim 21 or claim 22 wherein the strands have a tex value from 50 to 1000, preferably 100 to 500 g/km.

24. A rubber article comprising a rubber matrix and a cord according to any one of claims 21 to 23, wherein the rubber matrix comprises ethylene-propylene-diene monomer rubber.

25. A rubber article according to claim 24 wherein the rubber matrix comprises a filler.

## Patentansprüche

1. Verfahren zum Bilden, durch Extrusion oder Formen, eines Kautschukartikels, der verstärkende Stränge eines Verstärkungsmaterials in einer Kautschukmatrix umfasst, die Ethylen-Propylen-Dien-Monomer-Kautschuk umfasst, wobei das Verfahren die aufeinanderfolgenden Schritte umfasst des:
i) Beschichtens der Stränge mit einem Beschichtungslatex, der bei der Extrusions-, Aushärtungs- oder Formungstemperatur aushärtbar ist, derart, dass der Beschichtungslatex nach dem Beschichten im Wesentlichen unausgehärtet bleibt,
ii) Trocknens des Beschichtungslatex, um einen Beschichtungsfilm zu bilden, derart, dass der Beschichtungsfilm nach dem Trocknen im Wesentlichen unausgehärtet bleibt,
iii) Bildens des Kautschukartikels, der verstärkende Stränge in einer Kautschukmatrix umfasst, die Ethylen-Propylen-Dien-Monomer-Kautschuk umfasst, durch Extrudieren oder Formen und Aushärten bei einer Temperatur und für eine Zeitspanne, wodurch der Beschichtungsfilm auf den Strängen innerhalb des Kautschukartikels im Wesentlichen ausgehärtet wird,
wobei der Beschichtungslatex halogenierten Kautschuk, Metalloxid, Maleimid-Vernetzungsmittel und Nitrosoverbindung, die in Wasser dispergiert ist, umfasst.

2. Verfahren nach Anspruch 1, wobei die Stränge vor dem Bilden des Kautschukartikels zu einem Cord gebildet werden.

3. Verfahren nach Anspruch 1 oder Anspruch 2, wobei die Stränge vor dem Beschichten der Stränge zu einem Cord gebildet werden.

4. Verfahren nach einem der vorhergehenden Ansprüche, wobei der halogenierte Kautschuk aus der Gruppe ausgewählt ist bestehend aus Chloroprenkautschuk, chlorsulfoniertem Polyethylenkautschuk und Mischungen davon.

5. Verfahren nach einem der vorhergehenden Ansprüche, wobei die Stränge von Verstärkungsmaterial aus der Gruppe ausgewählt sind bestehend aus Glas, Polyester, Aramid, Kohlefasern und Mischungen davon.

6. Verfahren nach einem der vorhergehenden Ansprüche, wobei die Kautschukmatrix einen Füllstoff umfasst.

7. Verfahren nach Anspruch 6, wobei die Kautschukmatrix mindestens 100 phr Füllstoff umfasst.

8. Verfahren nach Anspruch 6 oder Anspruch 7, wobei der Füllstoff aus der Gruppe ausgewählt ist bestehend aus Ruß, Calciumcarbonat, Öl und Mischungen davon.

9. Verfahren nach einem der vorhergehenden Ansprüche, wobei der Kautschuk der Kautschukmatrix mindestens 20 Ges.-% Ethylen-Propylen-Dien-Monomer-Kautschuk umfasst.

10. Verfahren nach einem der vorhergehenden Ansprüche, wobei die Kautschukmatrix mindestens 50 Gew.-% Ethylen-Propylen-Dien-Kautschuk umfasst.

11. Verfahren nach Anspruch 10, wobei der Kautschuk der Kautschukmatrix mindestens 90 Gew.-% Ethylen-Propylen-Dien-Kautschuk umfasst.

12. Beschichtungslatex zum Beschichten von faserartigem Verstärkungsmaterial für extrudierte oder geformte Kautschukartikel, umfassend ein Metalloxid, ein Maleimid-Vernetzungsmittel, eine Nitrosoverbindung und halogenierten Kautschuk, die in Wasser dispergiert sind.

13. Beschichtungslatex nach Anspruch 12, wobei die Nitrosoverbindung p-Dinitrosobenzol ist.

14. Beschichtungslatex nach Anspruch 12 oder Anspruch 13, wobei das Metalloxid Zinkoxid ist.

15. Beschichtungslatex nach einem der Ansprüche 12 bis 14, wobei der halogenierte Kautschuk aus der Gruppe ausgewählt ist bestehend aus Chloroprenkautschuk, chlorsulfoniertem Polyethylenkautschuk und Mischungen davon.

16. Beschichtungslatex nach einem der Ansprüche 12 bis 15, wobei der nichtwässrige Teil der Beschichtungszusammensetzung 10 bis 80 Ges.-% halogenierten Kautschuk umfasst.

17. Beschichtungslatex nach einem der Ansprüche 12 bis 16, wobei der nichtwässrige Teil der Beschichtungszusammensetzung 3 bis 50 Ges.-% Nitrosoverbindung umfasst.

18. Beschichtungslatex nach einem der Anspruche 12 bis 17, wobei der nichtwässrige Teil der Beschichtungszusammensetzung 2 bis 30 Gew.-% Maleimid-Vernetzungsmittel umfasst.

19. Beschichtungslatex nach einem der Ansprüche 12 bis 18, wobei der nichtwässrige Teil der Beschichtungszusammensetzung 1 bis 25 Ges.-% Metalloxid umfasst.

20. Beschichtungslatex nach einem der Ansprüche 12 bis 19, 20 bis 90 Gew.-% Wasser umfassend.

21. Cord zum Verstärken von Kautschukartikeln, umfassend Stränge von Verstärkungsmaterial, die mit einem Beschichtungsfilm beschichtet sind, der durch Trocknen eines Beschichtungslatex nach einem der Ansprüche 12 bis 20 gebildet wird.

22. Cord nach Anspruch 21, wobei die Stränge aus Glasfasern bestehen.

23. Cord nach Anspruch 21 oder Anspruch 22, wobei die Stränge einen tex-Wert von 50 bis 1000, bevorzugt 100 bis 500 g/km aufweisen.

24. Kautschukartikel umfassend eine Kautschukmatrix und einen Cord nach einem der Ansprüche 21 bis 23, wobei dic Kautschukmatrix Ethylen-Propylen-Dien-Monomer-Kautschuk umfasst.

25. Kautschukartikel nach Anspruch 24, wobei die Kautschukmatrix einen Füllstoff umfasst.

## Revendications

1. Procédé de formation par extrusion ou moulage d'un article en caoutchouc comprenant des brins de renforcement d'un matériau de consolidation dans une matrice en caoutchouc comprenant un caoutchouc monomère d'éthylène-propylène-diène, le procédé comprenant les étapes séquentielles de :
i) enrobage des brins avec un latex d'enrobage durcissable à la température d'extrusion, de durcissement ou de moulage, de sorte que le latex d'enrobage demeure substantiellement non durci après l'enrobage,
ii) séchage du latex d'enrobage pour former un film d'enrobage de sorte que le film d'enrobage demeure substantiellement non durci après le séchage,
iii) la formation de l'article en caoutchouc comprenant les brins de renforcement dans une matrice en caoutchouc comprenant un caoutchouc monomère d'éthylene-propylène-diène par extrusion ou moulage et le durcissement à une température et sur une certaine durée moyennant quoi le film d'enrobage des brins est substantiellement durci à l'intérieur de l'article en caoutchouc,
dans lequel le latex d'enrobage comprend un caoutchouc halogéné, un oxyde métallique, un agent de réticulation maléimide et un composé nitroso dispersé dans l'eau.

2. Procédé selon la revendication 1, dans lequel les brins sont mis en forme de corde avant la formation de l'article en caoutchouc.

3. Procédé selon la revendication 1 ou la revendication 2, dans lequel les brins sont mis en forme de corde avant l'enrobage des brins.

4. Procédé selon l'une quelconque des revendications précédentes, dans lequel le caoutchouc halogéné est sélectionné parmi le groupe constitué du caoutchouc de chloroprène, du caoutchouc de polyéthylène chlorosulfoné et de leurs mélanges.

5. Procédé selon l'une quelconque des revendications précédentes, dans lequel les brins de matériau de renforcement sont sélectionnés parmi le groupe constitué du verre, du polyester, de l'aramide, des fibres de carbone et de leurs mélanges.

6. Procédé selon l'une quelconque des revendications précédentes, dans lequel la matrice en caoutchouc comprend une charge.

7. Procédé selon la revendication 6, dans lequel la matrice en caoutchouc comprend au moins 100 ppc de charge.

8. Procédé selon la revendication 6 ou la revendication 7, dans lequel la charge est sélectionnée parmi le groupe constitué du noir de carbone, du carbonate de calcium, de l'huile et de leurs mélanges.

9. Procédé selon l'une quelconque des revendications précédentes, dans lequel le caoutchouc de la matrice en caoutchouc comprend au moins 20 % en poids de caoutchouc monomère d'éthylène-propylène-diène.

10. Procédé selon l'une quelconque des revendications précédentes, dans lequel la matrice en caoutchouc comprend au moins 50 % en poids de caoutchouc monomère d'éthyléne-propylène-diéne.

11. Procédé selon la revendication 10, dans lequel le caoutchouc de la matrice en caoutchouc comprend au moins 90 % en poids de caoutchouc d'éthylène-propylène-diène.

12. Latex d'enrobage, pour l'enrobage d'un matériau filamenteux de consolidation pour des articles en caoutchouc extrudé ou moulé, comprenant un oxyde métallique, un agent de réticulation maléimide, un composé nitroso et un caoutchouc halogéné, dispersés dans de l'eau.

13. Latex d'enrobage selon la revendication 12, dans lequel le composé nitroso est le p-dinitrosobenzène.

14. Latex d'enrobage selon la revendication 12 ou la revendication 13, dans lequel l'oxyde métallique est l'oxyde de zinc.

15. Latex d'enrobage selon l'une quelconque des revendications 12 à 14, dans lequel le caoutchouc halogéné est sélectionné par le groupe constitué du caoutchouc de chloroprène, du caoutchouc chlorosulfoné de polyéthylène et de leurs mélanges.

16. Latex d'enrobage selon l'une quelconque des revendications 12 à 15, dans lequel la partie non aqueuse de la composition d'enrobage comprend de 10 à 80 % en poids de caoutchouc halogéné.

17. Latex d'enrobage selon l'une quelconque des revendications 12 à 16, dans lequel la partie non aqueuse de la composition d'enrobage comprend de 3 à 50 % en poids du composé nitroso.

18. Latex d'enrobage selon l'une quelconque des revendications 12 à 17, dans lequel la partie non aqueuse de la composition d'enrobage comprend de 2 à 30 % en poids de l'agent de réticulation maléimide.

19. Latex d'enrobage selon l'une quelconque des revendications 12 à 18, dans lequel la partie non aqueuse de la composition d'enrobage comprend de 1 à 25 % en poids d'oxyde métallique.

20. Latex d'enrobage selon l'une quelconque des revendications 12 à 19, comprenant de 20 à 90 % en poids d'eau.

21. Corde pour des articles de renforcement en caoutchouc comprenant des brins de matériau de renforcement enrobés d'un film d'enrobage formé par séchage d'un latex d'enrobage selon l'une quelconque des revendications 12 à 20.

22. Corde selon la revendication 21, dans laquelle les brins sont des fibres de verre.

23. Corde selon la revendication 21 ou la revendication 22, dans laquelle les brins ont une valeur tex de 50 à 1000, de préférence 100 à 500 g/km.

24. Article en caoutchouc comprenant une matrice en caoutchouc et une corde selon l'une quelconque des revendications 21 à 23, dans lequel la matrice en caoutchouc comprend du caoutchouc terpolymère d'éthylène-propylène-diène.

25. Article en caoutchouc selon la revendication 24, dans lequel la matrice en caoutchouc comprend une charge.
